# EUROPÄISCHE PATENTSCHRIFT

(11) **EP 2 017 485 B1**
(45) Veröffentlichungstag und Bekanntmachung des Hinweises auf die Patenterteilung: **04.01.2012**
(21) Anmeldenummer: 08104126.1
(22) Anmeldetag: 28.05.2008
(51) Int. Cl.: F16B 37/08

(54) **Anbindevorrichtung**
Connecting device
Dispositif d'attache

(30) Priorität: 18.07.2007 DE 102007000387
(43) Veröffentlichungstag der Anmeldung: 21.01.2009
(73) Patentinhaber: HILTI Aktiengesellschaft, 9494 Schaan (LI)
(72) Erfinder: Ostermeier, Peter, 86911, Diessen (DE); Hoffmann, Armin, 86899, Landsberg (DE); Merhar, Thomas, 9494, Schaan (LI)
(74) Vertreter: Wildi, Roland

(56) Entgegenhaltungen:
- EP-A2- 0 905 425
- EP-B1- 1 426 635
- US-A1- 2005 238 460

## Beschreibung

Die Erfindung betrifft eine Anbindevorrichtung für eine Gewindestange mit einem Befestigungselement zur Festlegung der Anbindevorrichtung an einem Bauteil und mit einer Justiereinrichtung für die Gewindestange, wobei die Justiereinrichtung ein drehbar in dem Befestigungselement gelagertes Hülsenelement mit einem Innengewinde für die Gewindestange sowie an einem ersten Endbereich einen radial von dem Hülsenelement abragenden Vorsprung zum Hintergreifen des Befestigungselementes aufweist.

Für eine flexible Installation von Leitungen, wie Rohren, Lüftungskanälen, Elektrokabeltrassen und dergleichen, im Bereich der Haustechnik oder der Industrie werden die Leitungen in Rohrschellen angeordnet und über Gewindestangen an einem Bauteil oder einem Untergrund festgelegt.

Aus der DE 38 23 000 A1 ist eine Anbindevorrichtung für eine Gewindestange an einem Bauteil in Form einer Montageschiene bekannt, die ein Befestigungselement und eine Justiereinrichtung für die Gewindestange aufweist. Die Justiereinrichtung weist ein drehbar in dem Befestigungselement gelagertes Hülsenelement mit einem Innengewinde für die Gewindestange sowie mit einem Aussengewinde auf. An einem ersten Endbereich des Hülsenelementes ist ein radial von diesem abragender Vorsprung zum Hintergreifen des Befestigungselementes vorgesehen. Nach der Anordnung des Befestigungselementes an dem Bauteil wird auf das Aussengewinde des Hülsenelementes eine Spannmutter aufgeschraubt, bis die Anbindevorrichtung an dem Bauteil festgelegt ist. Anschliessend wird die an der Anbindevorrichtung festzulegende Gewindestange in das Innengewinde eingeschraubt und nach der gewünschten Ausrichtung bezüglich der Montageschiene mit einer auf der Gewindestange angeordneten Sicherungsmutter in dieser Stellung fixiert.

Nach dem Einlegen der Leitungen in die Rohrschellen ist es oftmals erforderlich, z. B. aufgrund von Unebenheiten des Untergrundes oder zur Gewährleistung eines Gefälles der zu fixierenden Leitung, die Anbindung nachträglich in der Höhe zu justieren und somit die Leitungen jeweils im gewünschten Abstand zum Untergrund auszurichten.

Nachteilig an der bekannten Lösung ist, dass die Gewindestange eingeschraubt werden muss, was bei einer grösseren Verankerungslänge der Gewindestange in der Anbindevorrichtung aufwändig ist.

Die EP 0905425 A2 betrifft ein Befestigungselement zum Festlegen beliebiger Bauteile an einer hinterschnittenen Befestigungsöffnung, mit einem in diese einsetzbaren Stützteil, das im Inneren der Befestigungsöffnung verdrehbar ist und dabei die Befestigungsöffnung begrenzenden Haltevorsprünge hintergreift, mit einer separaten Gegenhalteplatte, die aussen an den Haltevorsprüngen abstützt, sowie mit einem elastischen Element, wobei das elastischen Element das Stützteil und die Gegenhalteplatte verbindet und ein Verbindungsteil am Stützteil drehbar zu befestigen ist und in seiner Längsrichtung längenanpassbar ist, wenn das Befestigungselement an der Befestigungsöffnung festgelegt ist.

Aus der US2005/0238460A1 geht eine schnell festlegbare Mutter hervor, welche zwei radial verschiebbare Gewindebacken aufweist.

Aufgabe der Erfindung ist es, eine Anbindevorrichtung für justierbare Gewindestangen zu schaffen, die neben einer Feinjustierung auch eine einfache Grobjustierung beziehungsweise eine Schnellanbindung der Gewindestange ermöglicht.

Die Aufgabe ist durch die Merkmale des unabhängigen Anspruchs gelöst. Vorteilhafte Weiterbildungen sind in den Unteransprüchen dargelegt.

Gemäss der Erfindung ist das Innengewinde des Hülsenelementes von zumindest zwei Gewindebacken gebildet, die in Ausnehmungen des Hülsenelementes in radialer Richtung verschieblich gelagert sind. Ferner ist ein drehfest mit dem Hülsenelement verbundenes und axial zu diesem versetzbares Fixiermittel vorgesehen, das in einer Fixierstellung die Gewindebacken in einer in das Gewinde der Gewindestange eingreifenden Stellung fixiert.

In einer Freigabestellung des Fixiermittels sind die Gewindebacken in radialer Richtung bezogen auf die Längsachse der Anbindevorrichtung beziehungsweise des Hülsenelementes verschieblich. Die Anbindevorrichtung kann in der Freigabestellung des Fixiermittels einfach auf das freie Ende der Gewindestange geschoben werden, wobei die im Hülsenelement gelagerten Gewindebacken radial nach aussen ausweichen. Sobald der Vorschub der Gewindestange in Richtung der Längsachse der Anbindevorrichtung unterbrochen wird, greifen die zumindest zwei Gewindebacken wieder in das Gewinde der Gewindestange ein. Das entsprechende Ende der Gewindestange kann auch in eine bereits am Bauteil festgelegte Anbindevorrichtung eingeschoben werden.

Durch Drehen des Hülsenelementes wird die Gewindestange, welche über die Gewindebacken mit dem Hülsenelement in Eingriff steht, in der Höhe beziehungsweise im Abstand zu dem Bauteil justiert, ohne dass eine Rotation der Gewindestange und einem daran angeordneten Element, wie beispielsweise einer Rohrschelle erfolgt. Dadurch kann die Gewindestange einfach auch unter Last in der Höhe feinjustiert werden. Anschliessend wird beispielsweise ein auf der Gewindestange angeordnetes Sicherungsmittel, z. B. in Form einer Slcherungsmutter zur Sicherung der Anbindung mit der Justiereinrichtung in Anlage gebracht. Ein wesentlicher Vorteil der erfindungsgemässen Anbindevorrichtung liegt in der Flexibilität der Anwendung, welche zu jedem Zeitpunkt eine Fein- wie auch eine Grobjustierung der daran angeordneten Gewindestange und zudem eine Schnellanbindung der Gewindestange an der Anbindevorrichtung erlaubt.

In einer Ausführungsform der Erfindung sind beispielsweise Öffnungen für die Durchführung von Befestigungsmitteln, wie z. B. Schrauben in dem Befestigungselement vorgesehen, welche eine Anordnung der Anbindevorrichtung am Bauteil ermöglichen. Die gesamte Justiereinrichtung ist über das Hülsenelement drehbar in dem Befestigungselement gelagert und stellt die Fixierung der Gewindestange in axialer Richtung sicher.

Für eine einfache und flexible Installation von Leitungen werden vorteilhafterweise Montageschienen als Bauteile vorgesehen, an denen die Gewindestangen festgelegt werden. Derartige Montageschienen weisen zumindest eine in Längserstreckung der Montageschiene verlaufende, von zueinander beabstandeten Rändern begrenzte Montageöffnung auf.

Zur Ausbildung einer an einer solchen Montageschiene anordnenbaren Anbindevorrichtung ist das Befestigungselement beispielsweise als ein Hintergreifteil ausgebildet, das vorteilhaft eine Länge, die kleiner als der Abstand der die Montageöffnung der Montageschiene begrenzenden Ränder zueinander ist, sowie eine Breite aufweist, die grösser als der Abstand der Ränder der Montageöffnung zueinander ist. Ein derartiges Befestigungselement kann durch die Montageöffnung in die Montageschiene eingeführt und durch eine Drehung der Anbindevorrichtung um die Längsachse von etwa 90° in eine die Montageöffnung hintergreifende Stellung gebracht werden. In der unverspannten Stellung der Anbindevorrichtung ist diese für eine Positionierung der Rohrschelle entlang der Montageschiene verschiebbar. Beim Verspannen der Anbindevorrichtung werden Bereiche der die Montageöffnung begrenzenden Ränder zwischen dem Befestigungselement und einem Sicherungsmittel eingeklemmt.

Weiter vorteilhaft ist ein Federelement zur Federbeaufschlagung des Befestigungselementes zwischen dem am ersten Endbereich des Hülsenelementes angeordneten Vorsprung und dem Befestigungselement vorgesehen. Das Federelement ist eine Druckfeder und beispielsweise als Spiralfeder ausgebildet. Das Federelement spannt das Befestigungselement in Richtung des freien, dem ersten Endbereich des Hülsenelementes gegenüberliegenden Endes des Hülsenelementes vor, so dass nach der Anordnung der Anbindevorrichtung an einem Bauteil mit einer von Rändern begrenzten Montageöffnung, wie z. B. eine Montageschiene, die Anbindevorrichtung z. B. in Verbindung mit einem auf der Gewindestange angeordneten Sicherungsmittel selbsthemmend gehalten ist. Infolge der selbsthemmenden Verschiebbarkeit der Anbindevorrichtung in der Montageöffnung ist auch bei vertikal ausgerichteten Bauteilen eine einfache Montage der Anbindevorrichtung gewährleistet.

Weiter vorteilhaft umfasst die Anbindevorrichtung ein Anschlagelement, das zwischen dem Hintergreifteil und z. B. einem Sicherungsmittel vorgesehen ist. Das Anschlagelement kommt mit der Aussenseite der Montageschiene in Anlage. Das Einstellelement liegt vorteilhaft an der Aussenseite des Anschlags an und ist zu diesem verdrehbar. Weist das Bauteil eine von Rändern begrenzte Montageöffnung auf, so werden die Bereiche der die Montageöffnung begrenzenden Ränder beim Verspannen der Anbindevorrichtung zwischen dem Befestigungselement und dem Anschlagelement eingeklemmt.

Die Anbindevorrichtung wird dem Anwender vorteilhaft vormontiert zur Verfügung gestellt, wobei die einzelnen Teile der Anbindevorrichtung weiter vorteilhaft unverlierbar miteinander verbunden sind.

Vorzugsweise ist ein Federelement zur radialen Federbeaufschlagung der Gewindebacken vorgesehen, welches die Gewindebacken bezogen auf das Hülsenelement nach radial innen vorspannt. Dies gewährleistet einen sicheren Eingriff der Gewindebacken in das Gewinde der Gewindestange sobald diese nicht mehr von der in Richtung der Längsachse geschobenen Gewindestange nach radial aussen gedrückt werden.

Bevorzugt umfasst das Fixiermittel Blockierelemente zur Fixierung der Gewindebacken. Werden die Blockiermittel von ihrer Freigabestellung in die Fixierstellung, z. B. in Richtung des Befestigungselementes axial versetzt, kommen die Blockierelemente mit den Gewindebacken in Anlage und fixieren diese in einer in das Gewinde der Gewindestange eingreifenden Position, so dass die Gewindebacken radial unverschieblich gesichert sind. Vorteilhaft liegen die Blockierelemente in der Fixierstellung des Fixiermittels an der radial aussenseitigen Aussenfläche der Gewindebacken an.

Vorzugsweise sind die Blockierelemente in zumindest einer axialen Aufnahme im Hülsenelement geführt und bilden die drehfeste Verbindung zwischen dem Einstellelement und dem Hülsenelement aus. Die axiale Aufnahme ist beispielsweise eine Bohrung die von einem zweiten, dem ersten Endbereich gegenüberliegenden Ende des Hülsenelementes ausgehend in die Ausnehmungen für die das Innengewinde des Hülsenelementes bildenden Gewindebacken mündet.

Bevorzugt sind Blockierelemente zur Fixierung der Gewindebacken an dem Einstellelement vorgesehen, wobei die Blockierelemente von dem Einstellelement in Richtung des Befestigungselementes abragen. Weiter vorteilhaft ist das Einstellelement zum Hülsenelement axial verschiebbar, was ein einfaches Versetzen des Einstellelementes ermöglicht.

Bevorzugt sind die Blockierelemente in zumindest einer axialen Aufnahme im Hülsenelement geführt. Die axiale Aufnahme ist beispielsweise eine Bohrung die von einem zweiten, dem ersten Endbereich gegenüberliegenden Ende des Hülsenelementes ausgehend in die Ausnehmungen für die das Innengewinde des Hülsenelementes bildenden Gewindebacken mündet.

Erfindungsgemäss ist ein Einstellelement vorgesehen, wobei die Fixiermittel von dem Einstellelement in Richtung des Befestigungselementes abragen und eine drehfeste Verbindung zwischen dem Einstellelement und dem Hülsenelement ausbilden. Die Feinjustierung der in der Anbindevorrichtung festgelegten Gewindestange ist durch das Einstellelement vereinfacht. Durch Drehen des drehfest mit dem Hülsenelement verbundenen Einstellelementes wird das Hülsenelement gedreht und die Gewindestange in der Höhe beziehungsweise im Abstand zu dem Bauteil justiert, ohne dass eine Rotation der Gewindestange und einem daran angeordneten Element, wie beispielsweise einer Rohrschelle erfolgt. Bei einer Anbindevorrichtung, die als Befestigungselement ein Hintergreifteil zur Anordnung der Anbindevorrichtung beispielsweise an einer Montageschiene aufweist, bildet das Einstellelement ein Gegenlager aus. Beim Verspannen der Anbindevorrichtung werden die Bereiche der die Montageöffnung begrenzenden Ränder beim Verspannen der Anbindevorrichtung zwischen dem Befestigungselement und dem Einstellelement direkt oder bei Vorhandensein eines Anschlagelementes indirekt über dieses eingeklemmt.

Bevorzugt weist das Einstellelement einen dem Befestigungselement zugewendeten Anschlag auf, der die axiale Verschiebbarkeit des Einstellelementes in Richtung des Befestigungselementes beschränkt. Vorteilhaft ist der Abstand des Einstellelementes zum Befestigungselement in der Fixierstellung der Fixiermittel, in welcher die Gewindebacken in eingreifender Stellung fixiert sind, kleiner, als in der Freigabestellung der Fixiermittel, in welcher die Gewindebacken nach radial aussen verschieblich sind.

Erfindungsgemäss ist ein Drehangriffsmittel, z. B. für ein Werkzeug, an dem Einstellelement vorgesehen, das ein einfaches Feinjustieren der in der Anbindevorrichtung festgelegten Gewindestange ermöglicht

Die Erfindung wird nachstehend anhand eines Ausführungsbeispiels näher erläutert. Es zeigen:
- Fig. 1: Einen Schnitt durch eine erfindungsgemässe Anbindevorrichtung in der Freigabestellung; und
- Fig. 2: Einen Schnitt durch die erfindungsgemässe Anbindevorrichtung in der Fixierstellung.

Grundsätzlich sind in den Figuren gleiche Teile mit den gleichen Bezugszeichen versehen.

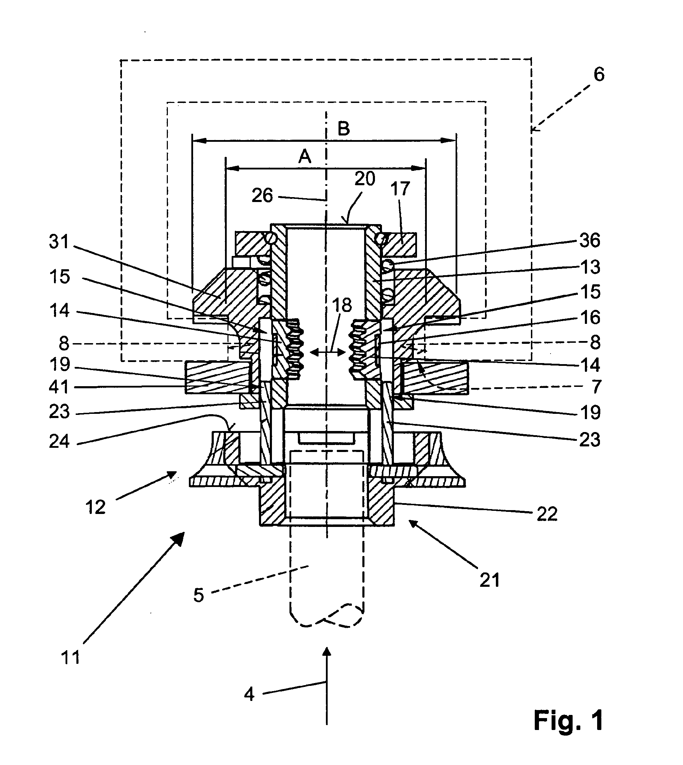

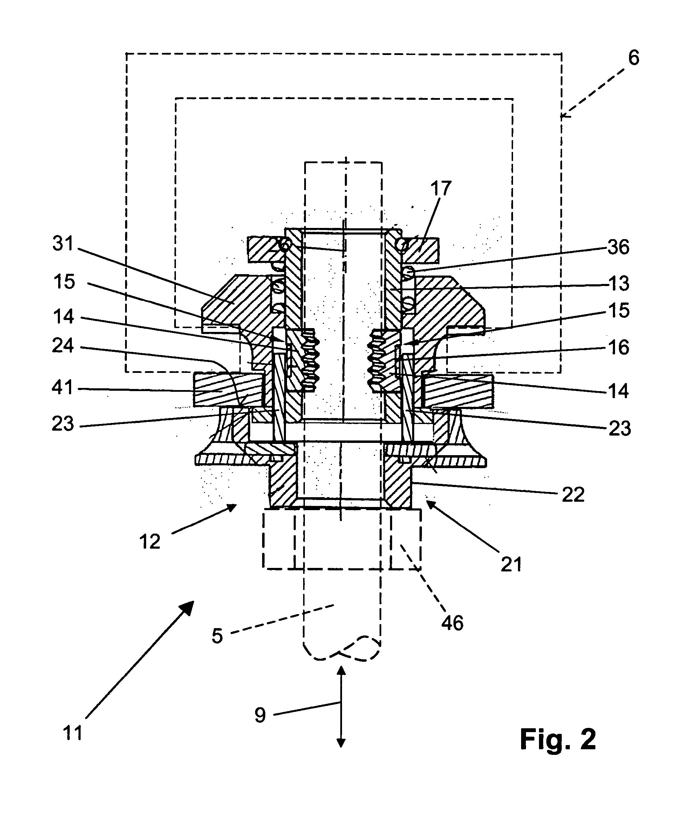

In den Figuren 1 und 2 ist eine Anbindevorrichtung 11 für eine unter Last justierbare Gewindestange 5 zur Festlegung an einem Bauteil, hier an einer Montageschiene 6 gezeigt. Die Montageschiene 6 weist eine in der Längserstreckung der Montageschiene 6 verlaufende Montageöffnung 7 auf, die von zueinander in einem Abstand A beabstandeten Rändern 8 begrenzt ist.

Die Anbindevorrichtung 11 umfasst ein Befestigungselement 31 zur Festlegung der Anbindevorrichtung 11 an einem Bauteil, wobei das Befestigungselement 31 als Hintergreifteil zum bereichsweisen Hintergreifen der die Montageöffnung 7 begrenzenden Ränder 8 der Montageschiene 6 ausgebildet ist. Das Befestigungselement 31 weist vorteilhaft eine Länge, die kleiner als der Abstand A der die Montageöffnung 7 der Montageschiene 6 begrenzenden Ränder 8 zueinander ist, sowie eine Breite B auf, die grösser als der Abstand A der Ränder 8 der Montageöffnung 7 zueinander ist. Das Befestigungselement 31 ist an zwei, einander gegenüberliegenden Seitenrändern, die im hintergreifenden Zustand des Befestigungselementes 31 mit der Montageschiene 6 in Anlage kommen, mit einer als Verzahnung ausgebildeten Profilierung versehen.

Weiter umfasst die Anbindevorrichtung 11 eine Justiereinrichtung 12 für die Gewindestange 5, wobei die Justiereinrichtung 12 ein drehbar in dem Befestigungselement 31 gelagertes Hülsenelement 13 mit einem Innengewinde, das von zwei Gewindebacken 14 gebildet ist, für die Gewindestange 5 sowie an einem ersten Endbereich 20 einen radial von dem Hülsenelement 13 abragenden Vorsprung 17 zum Hintergreifen des Befestigungselementes 31 aufweist. Die das Innengewinde ausbildenden Gewindebacken 14 sind radial zur Längsachse 26 der Anbindevorrichtung 11 verschieblich in Ausnehmungen 15 des Hülsenelementes 13 gelagert und von einem die Gewindebacken 14 aussenseitig umgebenden Federelement 16 radial nach innen federbeaufschlagt.

Weiter weist die Justiereinrichtung 12 ein drehfest mit dem Hülsenelement 13 verbundenes und axial zu diesem versetzbares Fixiermittel zur Fixierung der Gewindebacken 14 in Form von zwei Blockierelementen 23 auf, die von einem Einstellelement 21 in Richtung des Befestigungselementes 31 abragen. Die Blockierelemente 23 sind in einer axialen Aufnahme 19 im Hülsenelement 13 geführt und bilden die drehfeste Verbindung zwischen dem Einstellelement 21 und dem Hülsenelement 13 aus. Die Fixiermittel fixieren in einer Fixierstellung die Gewindebacken 14 in einer in das Gewinde der Gewindestange 5 eingreifenden Stellung. An dem Einstellelement 21 ist ein dem Befestigungselement 31 zugewandeter Anschlag 24 vorgesehen, der die axiale Verschiebbarkeit des Einstellelementes 21 in Richtung des Befestigungselementes 31 begrenzt. An der Aussenseite des Einstellelementes 21 ist eine Sechskantausbildung als Drehangriff 22 für ein Verspannwerkzeug vorgesehen.

Ein Federelement 36 zur Federbeaufschlagung des Befestigungselementes 31 in Richtung des Einstellelementes 21 ist zwischen dem ersten Endbereich 20 des Hülsenelementes 13 umlaufend angeordneten Vorsprung 17 und dem Befestigungselement 31 vorgesehen. Weiter umfasst die Anbindevorrichtung 11 zwischen dem Befestigungselement 31 und dem Einstellelement 21 ein Anschlagelement 41, das mit der Aussenseite der Montageschiene 6 in Anlage bringbar ist.

Zur Montage einer hier nicht dargestellten Rohrschelle wird das Befestigungselement 31 der Anbindevorrichtung 11, welche bereits vor der Anordnung an der Montageschiene 6 an der Gewindestange 5 angeordnet sein kann, an der gewünschten Stelle in die Montageschiene 6 eingeführt und die gesamte Anbindevorrichtung 11 um ihre Längsachse 26 um etwa 90° verdreht, so dass die Seitenränder des Befestigungselementes 31 die Ränder 8 der Montageöffnung 7 hintergreifen. Die Anbindevorrichtung 11 ist entlang der Montageöffnung 7 selbsthemmend verschiebbar. Das Einstellelement 21 und somit die Fixiermittel befinden sich in der, bezogen auf die Zeichnung zurückgezogenen Freigabestellung (siehe Fig. 1), in der die Blockierelemente 23 die Verschiebbarkeit der Gewindebacken 14 nach radial aussen nicht einschränken. Die Gewindestange 5 wird in Richtung des Pfeils 4 in die an der Montageschiene 6 angeordneten Anbindevorrichtung 11 eingeschoben, wobei die Gewindebacken 14 nach radial aussen ausweichen (siehe Doppelpfeil 18 in Fig. 1). Erfolgt keine weitere Verschiebung der Gewindestange 5 entlang der Längsachse 26 greifen die Gewindebacken 14 in das Gewinde der Gewindestange 5 ein und sichern die Gewindestange 5 in axialer Richtung. Nun wird die zu befestigende Leitung (hier nicht dargestellt) in die Rohrschelle eingelegt.

Durch Drehen des Einstellelementes 21 wird über die Fixiermittel das drehbar im Befestigungselement 31 gelagerte Hülsenelement 13 mitgedreht, wobei die über das mit dem Gewinde der Gewindestange 5 in Eingriff stehenden Gewindebacken 14 des Hülsenelementes 13 die Gewindestange 5 entsprechend der Drehrichtung des Einstellelementes 21 entlang der Längsachse 26 der Anbindevorrichtung 11 in Richtung des Doppelpfeils 9 zur Montageschiene 6 hin oder davon weg verschoben wird. Damit wird die Position der in der Rohrschelle angeordneten Leitung senkrecht zur Längsrichtung der das Bauteil bildenden Montageschiene 6 eingestellt. Nach der Justierung der Gewindestange 5 wird das Einstellelement 21 und somit das Fixiermittel axial in Richtung der Befestigungselement 31 verschoben und dadurch in die Fixierstellung gebracht. Die Blockierelemente 23 des Einstellelementes 21 hintergreifen in der Fixierstellung die Gewindebacken 14 und sichern diese gegen ein Ausweichen nach radial aussen. Der dem Befestigungselement 31 zugewandete Anschlag 24 am Einstellelement 21 begrenzt die axiale Verschiebung des Einstellelementes 21 in Richtung des Befestigungselementes 31. Mittels einer Sicherungsmutter 46 als Sicherungsmittel, die auf die Gewindestange 5 aufgeschraubt und mit dem Einstellelement 21 in Anlage gebracht wird, wird die Anbindevorrichtung 11 mit der Montageschiene 6 als Bauteil verspannt.

In einer Variante des Montagevorgangs wird die Gewindestange 5 bereits vor der Anordnung der Anbindevorrichtung 11 an dem Bauteil in die Anbindevorrichtung 11 eingeschoben und diese gleichzeitig mit der Anbindevorrichtung 11 an dem Bauteil festgelegt.

Weiter können die Fixiermittel bereits vor der Feinjustierung der Gewindestange 5 axial in Richtung des Befestigungselementes 31 verschoben werden, da die Feinjustierung auch in dieser Stellung der Fixiermittel erfolgen kann. Eine nachträgliche Fein- und Grobjustierung der Leitung ist mit der erfindungsgemässen Anbindevorrichtung 11 bei einer gelösten Sicherungsmutter 46 jederzeit möglich.

## Patentansprüche

1. Anbindevorrichtung für eine Gewindestange (5) mit einem Befestigungselement (31) zur Festlegung der Anbindevorrichtung (11) an einem Bauteil und mit einer Justiereinrichtung (12) für die Gewindestange (5), wobei
die Justiereinrichtung (12) ein drehbar in dem Befestigungselement (31) gelagertes Hülsenelement (13) mit einem Innengewinde für die Gewindestange (5) sowie an einem ersten Endbereich (20) einen radial von dem Hülsenelement (13) abragenden Vorsprung (17) zum Hintergreifen des Befestigungselementes (31) aufweist, **dadurch gekennzeichnet, dass**
das Innengewinde des Hülsenelementes (13) von zumindest zwei Gewindebacken (14) gebildet ist, die in Ausnehmungen (15) des Hülsenelementes (13) in radialer Richtung verschieblich gelagert sind,
ein drehfest mit dem Hülsenelement (13) verbundenes und axial zu diesem versetzbares Fixiermittel vorgesehen Ist, das in einer Fixierstellung die Gewindebacken (14) in einer in das Gewinde der Gewindestange (5) eingreifenden Stellung fixiert,
ein Einstellelement (21) vorgesehen ist, wobei die Fixiermittel von dem Einstellelement (21) in Richtung des Befestigungselementes (31) abragen und eine drehfeste Verbindung zwischen dem Einstellelement (21) und dem Hülsenelement (13) ausbilden, und
ein Drehangriffsmittel (22) an dem Einstellelement (21) vorgesehen ist.

2. Anbindevorrichtung nach Anspruch 1, **dadurch gekennzeichnet, dass** ein Federelement (16) zur radialen Federbeaufschlagung der Gewindebacken (14) vorgesehen ist

3. Anbindevorrichtung nach Anspruch 1 oder 2, **dadurch gekennzeichnet, dass** das Fixiermittel Blockierelemente (23) zur Fixierung der Gewindebacken (14) umfasst.

4. Anbindevorrichtung nach Anspruch 3, **dadurch gekennzeichnet, dass** die Blockierelemente (23) in zumindest einer axialen Aufnahme (19) im Hülsenelement (13) geführt sind.

5. Anbindevorrichtung nach einem der vorstehenden Ansprüche, **dadurch gekennzeichnet, dass** das Einstellelement (21) einen dem Befestigungselement (31) zugewandeten Anschlag (24) aufweist.

## Claims

1. A connecting device for a threaded rod (5) with a fastening element (31) for fixing the connecting device (11) to a structural component and with means (12) for adjusting the threaded rod (5), in which case
the adjusting means (12) comprise a sleeve element (13) pivoted in the fastening element (31), said sleeve element (13) having an inner thread for the threaded rod (5) as well as, in the region of a first end (20), a projection (17) protruding in radial direction from the sleeve element (13) for engaging behind said fastening element (31), **characterized in that** the inner thread of the sleeve element (13) is formed by at least two threaded jaws (14) which are mounted in recesses (15) of the sleeve element (13) so as to be displaceable in radial direction,
fixing means are provided which are attached to the sleeve element (13) so as to be torque-resistant and displaceable in axial direction relative to said sleeve element (13) and which, in a fixing position, fix the threaded jaws (14) in a position engaging in the thread of the threaded rod (5),
an adjusting element (21) is provided, the fixing means projecting from the adjusting element (21) in direction of the fastening element (31) and establishing a torque-resistant connection between the adjusting element (21) and the sleeve element (13), and
means (22) for the application of a rotational force are provided on the adjusting element (21).

2. A connecting device according to Claim 1, **characterized in that** a spring element (16) is provided for radial spring-loading of the threaded jaws (14).

3. A connecting device according to Claim 1 or 2, **characterized in that** the fixing means comprise blocking elements (23) for fixing the threaded jaws (14).

4. A connecting device according to Claim 3, **characterized in that** the blocking elements (23) are guided in at least one axial recess (19) in the sleeve element (13).

5. A connecting device according to one of the preceding claims, **characterized in that** the adjusting element (21) has a limit stop (24) facing the fastening element (31).

## Revendications

1. Dispositif d'attache pour une tige filetée (5) comportant un élément de fixation (31) pour fixer le dispositif d'attache (11) sur un composant de construction, et un dispositif d'ajustement (12) pour la tige filetée (5), dans lequel
le dispositif d'ajustement (12) comporte un élément de douille (13) monté de manière rotative dans l'élément de fixation (31), muni d'un filetage intérieur pour la tige filetée (5) ainsi qu'une saillie (17) faisant radialement saillie à partir de l'élément de douille (13) sur une première zone d'extrémité (20) pour la prise arrière de l'élément de fixation (31), **caractérisé en ce que**
le filetage intérieur de l'élément de douille (13) est formé par au moins deux mâchoires filetées (14) qui sont montées dans des évidements (15) de l'élément de douille (13) de manière mobile dans une direction radiale,
des moyens de fixation reliés à l'élément de douille (13) de manière bloquée en rotation et axialement mobiles par rapport à celui-ci sont prévus, lesquels moyens de fixation fixent, dans une position de fixation, les mâchoires filetées (14) dans une position de prise avec le filetage de la tige filetée (5),
un élément de réglage (21) est prévu, les moyens de fixation faisant saillie à partir de l'élément de réglage (21) en direction de l'élément de fixation (31) et formant une liaison bloquée en rotation entre l'élément de réglage (21) et l'élément de douille (13), et
des moyens de prise rotative (22) sont prévus sur l'élément de réglage (21).

2. Dispositif d'attache selon la revendication 1, **caractérisé en ce qu'**un élément de ressort (16) est prévu pour solliciter élastiquement et radialement les mâchoires filetées (14).

3. Dispositif d'attache selon la revendication 1 ou 2, **caractérisé en ce que** les moyens de fixation incluent des éléments de blocage (23) pour la fixation des mâchoires filetées (14).

4. Dispositif d'attache selon la revendication 3, **caractérisé en ce que** les éléments de blocage (23) sont guidés dans l'élément de douille (13) dans au moins un évidement axial (19).

5. Dispositif d'attache selon l'une quelconque des revendications précédentes, **caractérisé en ce que** l'élément de réglage (21) comporte une butée (24) dirigée vers l'élément de fixation (31).
